(19) **Europäisches Patentamt**

**European Patent Office**

**Office européen des brevets**

(11) **EP 1 354 483 B1**

(12) **EUROPEAN PATENT SPECIFICATION**

(45) Date of publication and mention
of the grant of the patent:
**04.10.2006 Bulletin 2006/40**

(51) Int Cl.:
***H04N 7/50*** (2006.01)

(21) Application number: **01906511.9**

(22) Date of filing: **22.01.2001**

(86) International application number:
**PCT/SG2001/000019**

(87) International publication number:
**WO 2002/058401 (25.07.2002 Gazette 2002/30)**

(54) **METHOD AND APPARATUS FOR VIDEO BUFFER VERIFIER UNDERFLOW AND OVERFLOW CONTROL**

VERFAHREN UND GERÄT ZUR REGELUNG DER ÜBER-/UNTERLAUFVERMEIDUNG EINES VIRTUELLEN SPEICHERS

PROCEDE ET APPAREIL PERMETTANT DE COMMANDER LE SOUSPASSEMENT ET LE DEPASSEMENT D'UN VERIFICATEUR TAMPON VIDEO

(84) Designated Contracting States:
**DE FR GB IT**

(43) Date of publication of application:
**22.10.2003 Bulletin 2003/43**

(73) Proprietor: **STMicroelectronics Asia Pacific Pte Ltd.**
**Singapore 569508 (SG)**

(72) Inventors:
• **GOH, Kwong, Huang**
**Singapore 600323 (SG)**

• **LUCAS, Hui, Y., W.**
**Singapore 579727 (SG)**

(74) Representative: **Prato, Roberto et al**
**STUDIO TORTA S.r.l.,**
**Via Viotti 9**
**10121 Torino (IT)**

(56) References cited:
**EP-A- 0 836 329**     **EP-A- 0 928 111**
**US-A- 5 801 779**     **US-A- 5 986 712**

**Description**

**Technical Field**

The present invention relates to Video Buffer Verifier (VBV) control of a video encoder, and in particular, to the efficient prevention of VBV underflow and overflow during MPEG-2 video encoding.

**Background Art**

VBV constraints in MPEG-2

The MPEG-2 coded bitstreams are required to meet the constraints imposed by the Video Buffer Verifier (VBV). The VBV is provided with an input buffer known as the VBV buffer which is conceptually used to simulate the entering and removing of coded data to and from a decoder's buffer.

Typically, constraints are imposed which require the entering and removing of the coded data so that the VBV buffer does not overflow or underflow. These constraints are used to guarantee that the decoder buffer will not overflow or underflow.

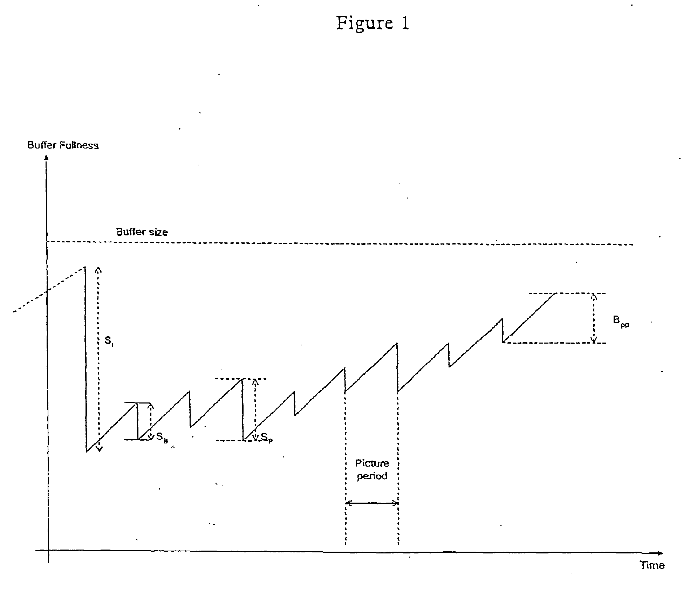

A virtual VBV buffer is maintained in the encoder and its buffer-fullness is updated to emulate the buffer-fullness in the decoder (refer to figure 1). Buffer overflow arises when a picture consumes too few bits while the decoder is nearly full. The bits which arrive at the decoder during the next picture period will then cause an overflow. Note that this overflow constraint applies only to the constant bit-rate application. Buffer underflow occurs when a picture generates too many bits. The constraints of underflow and overflow are considered separately.

VBV buffer-fullness, $VBV\_fullness_t$, where t is the picture period, is updated after encoding one picture as follows:

$$VBV\_fullness_t = VBV\_fullness_t - S \qquad\qquad (1)$$

where $S$ is the number of bits used for the encoded picture.

At this point, the MPEG-2 underflow constraint states that after the above buffer-fullness update, the buffer-fullness shall not be less than zero:

$$VBV\_fullness_t >= 0 \qquad\qquad (2)$$

The VBV buffer is then filled with the average number of bits per picture, $Bpp$, which is $Bit\_rate$ divided by $frame\_Tate$ (for variable bit-rate operation, the maximum bit-rate is used to calculate $Bpp$):

$$VBV\_fullness_{t+1} = VBV\_fullness_t + Bpp \qquad\qquad (3)$$

and at this point, the overflow constraint specifies that for a constant bit-rate operation the VBV buffer shall not be greater than the VBV buffer size:

$$VBV\_fullness_{t+1} <= VBV\_buffer\_size \qquad\qquad (4)$$

Details of the VBV specifications can be found in Annex C of the Recommendation ITU-T H.262 (ISO 13818-2 MPEG-2).

MPEG2 TM-5 rate control

In the MPEG-2 Test Model-5 (TM-5) of an MPEG-2 video encoder, "virtual buffer-fullness", is used to determine the reference quantization parameter. Before encoding macroblock j (j > =1), the fullness of the appropriate virtual buffer is computed:

$$d_j^i = d_0^i + B_j - 1 - T_i(j-1) / MB\_cnt$$

or

$$d_j^p = d_0^p + B_j - 1 - T_p(j-1) / MB\_cnt$$

or

$$d_j^b = d_0^b + B_j - 1 - T_b(j-1) / MB\_cnt$$

depending on the picture type,
where,

$d_0^i$, $d_0^p$, $d_0^b$ are initial fullness of virtual buffers - one for each picture type;
$B_j$ is the number of bits generated by encoding all macroblocks in the picture, up to and including j;
MB_cnt is the number of macroblocks in the picture; and
$d_j^i$, $d_j^p$, $d_j^b$ are the fullness of virtual buffers at macroblock j - one for each picture type.

The final fullness of the virtual buffer ($d_j^i$, $d_j^p$, $d_j^b$: j=MB_cnt) is used as do', $d_0^p$, $d_0^b$ for encoding the next picture of the same type.

The reference quantization parameter $Q_j$ for macroblock j is then computed as follows:

$$Q_j = (d_j * 31) / r$$

where the "reaction parameter" r is given by

$$r = 2 * bit\_rate / picture\_rate$$

and $d_j$ is the fullness of the appropriate virtual buffer.
The initial value for the virtual buffer-fullness is:

$$d_0^i = 10 * r/31$$

$$d_0^p = K_p \, d_0^i$$

$$d_0^b = K_b \, d_0^i$$

where $K_p$ and $K_b$ are "universal" constants dependent on the quantization matrices.

VBV control

It is to be noted that the following prior art relating to VBV buffer overflow and underflow control algorithm descriptions are typically performed prior to encoding a picture, and after the VBV buffer-fullness rises by *Bpp.*

Underflow control

In typical VBV underflow control, such as that disclosed in US Patent No. 5,650,860, two levels of control are performed. First, the picture level, and then, the macroblock level.

To control buffer underflow in picture level, the target bit *T* for the next picture is adjusted when necessary such that it does not lead to underflow:

$$VBV\_fullness - T >= 0 \qquad\qquad (5)$$

In addition to the picture-level preventing of buffer underflow, macroblock (MB) level control is utilised by means of defining a level above the "VBV_fullness=0" level named the "panic level". If the VBV_fullness should fall below this level, then the encoder will enter "panic mode". In this mode, only the minimum amount of data to maintain the integrity of the bitstream will be transmitted. In the panic mode all DCT coefficients and all motion vectors are set to zero, thereby generating a minimal amount of conforming encoded data.

To detect this panic level, macroblock (MB) level updating of VBV buffer-fullness is therefore required. The VBV_fullness is updated after encoding each MB:

$$VBV\_fullness = VBV\_fullness - S_{mb} \qquad\qquad (6a)$$

$$if\ (\ VBV\_fullness < panic\text{-}level)\ \text{----->}\ Enter\ Panic\ mode\ coding \qquad (6b)$$

where $S_{mb}$ is the number of bits used to encode the macroblock. The encoder will enter the panic mode coding when VBV buffer-fullness is less than panic level.

Overflow control

As disclosed in US Patent No. 5,650,860, to avoid VBV overflow, adding zero "stuffing bits" to the bitstream is utilised, when VBV overflow occurs after encoding a picture. However, instead of simply stuffing bits to the bitstream which is considered a waste, the encoder may first determine, prior to encoding a picture, if there are "extra bits", and add a value *extra_bits* to the target bits, *T,* to increase the bits used for the current picture that is to be encoded, which is given by:

$$extra\_bits = VBV\_fullness - T + Bpp - VBV\_buffer\_size \qquad (7)$$

$$If\ (extra\_bits > 0)\ then\quad T = T + extra\_bits \qquad\qquad (8)$$

After encoding the current picture, only the necessary number of filling bits are added to the bitstream.

It has been found that the picture-level overflow control is unable to prevent VBV buffer overflow effectively when a sequence switched from a high level of motion (having lots of scene-changes) to a low level of motion. One of the reasons is that the assumption used in equation (7) is not true most of the time.

Equation (7) assumes that the bits used for coding the current picture is equal to the target bits allocated *T* to forecast the amount of *extra_bits* required. This assumption is generally not true which is why the prediction of overflow at picture level is quite poor.

Another reason is that the quantization-step which is quite high during a "fast" sequence does not "react" or reduce fast enough when there is a sudden change to a "slow" sequence, therefore generating insufficient bits and causing the VBV buffer to overflow.

If a sequence of pictures are to difficult to encode at a given bit-rate (for example due to a very noisy and action-packed sequence or a synthetic sequence with lots of scene-changes coded at a low bit-rate), when even the maximum quantization-step is used and still could not be sustained at the given low bit-rate, the VBV buffer will reach the panic level.

The prior art prevention method of adjusting the target bits allocation *T* at picture level is not able to control bits in the VBV buffer when encoding a difficult sequence at a low bit-rate. Using the target bits allocated *T* to judge the potential of underflow is also not effective.

In panic mode encoding all DCT coefficients are set to zero, the intra-coded macroblocks will appear as "grey-level" blocks subsequently followed by B and P pictures which could be quite irritating, subjectively, to a user.

US-A-5 986 712 discloses a method and apparatus according to the preamble of claims 1 and 13, including controlling the target number of bits at picture level and also at stripe and macroblock level. However, such control is insufficient to effectively prevent overflow and underflow in some encoding scenarios.

US-A-5 801 779 discloses a rate control with panic mode using an MPEG compression method with modification of the quantization matrices.

This identifies a need for a new type of Video Buffer Verifier (VBV) control of a video encoder which overcomes the problems inherent in the prior art.

**Disclosure Of Invention**

According to the invention, a method for Video Buffer Verifier control of video encoder is provided according to claim 1. In a preferred embodiment, the present invention seeks to provide improved prevention of panic mode encoding, improved underflow and overflow prevention, and improved quality of video. This is sought to be achieved by implementing additional picture and slice level controls which include:

1) Virtual buffer fullness control (do);
2) Quantization-step range control (linear/non-linear quantization); and/or
3) Optional quantization matrices modification.

As macroblock level control is generally required in the panic mode detection and this control has higher implementation costs, it is also sought to be provided by the present invention that the complexity of VBV control is reduced by using slice level control instead of MB level control.

Preferably, slice level control is used in place of an MB level control.

In a broad form, the method results in improved prevention of an underflow or an overflow.

In a further broad form, the method results in improved encoding at a low bit-rate.

Preferably, the video encoding is MPEG-2 video encoding.

According to the invention, there is also provided an apparatus for Video Buffer Verifier (VBV) control of a video encoder, according to claim 12.

**Brief Description Of Figures**

The present invention will become apparent from the following description, which is given by way of example only, of a preferred but non-limiting embodiment thereof, described in connection with the accompanying figures, wherein:

• Figure 1 illustrates a preferred embodiment of the present invention

wherein, the figure shows an illustration of how a VBV buffer is updated.

• Figure 2 illustrates a preferred embodiment of the present invention

wherein, the figure shows a block diagram illustrating picture and slice level VBV control.

• Figure 3 illustrates a preferred embodiment of the present invention

wherein, the figure shows a detailed flow diagram the picture and slice level VBV buffer underflow and overflow control.

**Modes For Carrying Out The Invention**

In a particular embodiment, the present invention is directed to the prevention of VBV underflow and overflow during MPEG-2 video encoding.

Underflow control

Picture level:

The basic step in underflow and panic mode coding prevention is the reducing of the target bits $T$ when necessary. The target bits $T$ in equation (5) are replaced by ($T+PM$,) where $PM$ is defined as the preventive margin to take care of the additional bits that might be used to encode the next picture.

Apart from adjusting the target bits $T$, additional picture level prevention steps can be used.

A further preventive step is to increase the range of the quantization-step (Q-step) to be used, for example the MPEG-2 non-linear quantization scheme allows the quantization-step to go up to 112. This is used when a potential of panic mode occurrence is detected.

A still further preventive step which may be optionally employed is to use customised quantization matrices which are of higher values than the default Q matrix, when a higher potential of panic mode encoding is detected.

Slice level:

Instead of using the MB level of updating and checking panic level encoding, slice level is used to reduce computation requirements and the potential of panic mode coding of individual MB.

Slice level underflow control for panic mode detection and prevention is performed after encoding each slice of a picture. A Variable Panic Level (VPL) may be used. The VPL varies according to the number of remaining slices (j) to be coded. The slice panic level is made variable depending on the remaining number of slices yet to be encoded to further optimise the VBV control such that the encoder does not go into the panic mode prematurely.

In addition, a slice level adjustment of the virtual buffer-fullness, do, (described hereinbefore and in the rate-control of MPEG-2 TM-5) is performed when necessary. When there is a potential of panic mode encoding, the value of do (one for each picture-type) is increased to ensure that the quantization-step (which is computed based on the value of $d_j$) can reach the maximum value in a shorter time interval.

Overflow Control (for constant bitrate coding only)

Picture level:

As hereinbefore discussed, the picture level overflow prediction described in equations (7) and (8) is not effective. To render the prediction more sensitive, the value of $T$ in equation (8) is replaced by a value P which depends on the encoding bit-rate of the encoder.

In addition, the virtual buffer fullness do is reduced when *extra_bits* in equation (8) is greater than 0, in an attempt to reduce the Q-step more rapidly during the encoding of next picture.

Slice level:

The VBV buffer-fullness is estimated in each slice to check if the VBV buffer is going to be filled up, and $d_0$ is further reduced if necessary.

More Detailed Description

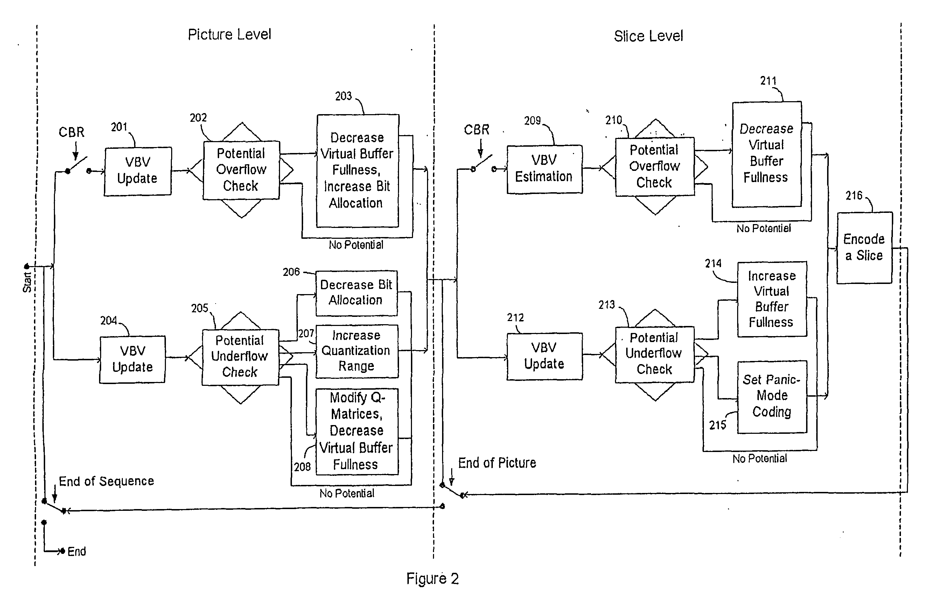

A preferred, but non-limiting, embodiment of the present invention is shown in figure 2. This figure shows the block diagram of the apparatus in accordance with the picture and slice level VBV control of the present invention. Note that overflow control is generally only carried out for constant bit-rate encoding.

At the picture level control, the VBV buffer-fullness is updated in the VBV Update modules 201 and 204 before the potential overflow and underflow check modules 202 and 205 respectively.

The virtual buffer-fullness $d_0$ is reduced and the target bit allocation is increased in module 203 if there is an overflow potential. If there is an underflow potential, according to the underflow potential level, one or more actions including reducing target bit *T* (module 206); increasing quantization range (module 207); and modifying the quantization matrices and reducing the virtual buffer fullness (module 208) are carried out.

At slice level (a row of MB), the VBV buffer-fullness is estimated in module 209. If an overflow potential is found in module 210, virtual buffer-fullness do is decreased in module 211. For underflow control, the slice level VBV update is performed in module 212 and the potential underflow check is performed in module 213.

Depending on the underflow potential level, actions are taken in module 214 to increase the virtual buffer fullness do and in module 215 to set the panic mode coding.

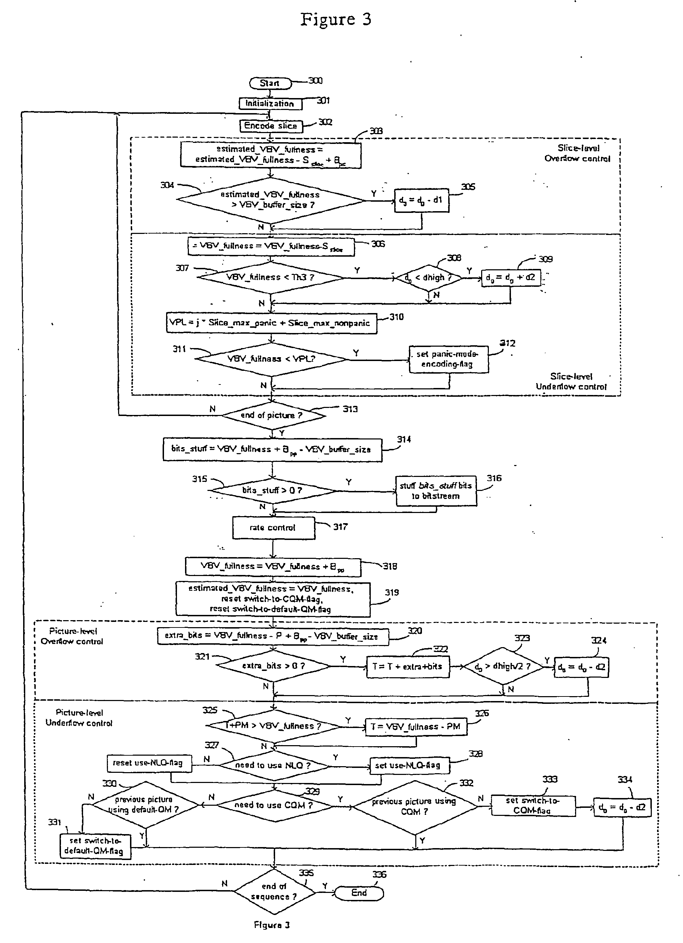

Figure 3 shows an example of the detailed flow diagram of the picture and slice level underflow and overflow control. The rate control in module 217 is a rate control which uses the virtual buffer-fullness $d_j$ for determination of quantization-step, such as in the MPEG-2 TM-5.

Picture level control:

For picture level overflow control, before encoding each picture, possible *extra_bits* is computed in module 320 and checked in module 321 as to whether the target bits *T* need to be increased in module 322:

$$extra\_bits = VBV\_fullness - P + Bpp - VBV\_buffer\_size \qquad (9)$$

The value of *P* is set depending on the encoding bit-rate, for example, 1/4*Bpp.

If the target bits are required to be increased by *extra_bits,* which indicates that the VBV buffer is about to overflow, the value of $d_0$ is reduced by a value *d2* in module 324 if it is found to be greater than *dhigh*/2 in module 323. This is to allow the Q-step to reduce fast enough when an overflow is likely in a situation such as sudden changes in motion activities from very fast to very slow.

In picture level underflow control, the target bits *T* is first adjusted if necessary in module 326:

$$if\ (\ (T+PM) > VBV\_fullness)\ then \quad T = VBV\_fullness - PM \qquad (10)$$

Setting a small *PM* value might not be enough to take care of the bits-used discrepancy, and setting a high *PM* might cause "over-reaction" or unnecessary adjustment in target bit *T.* The value of *PM* used is typically experimentally determined, for example a value equal to *Bpp* is often found to be suitable.

If a sequence of pictures is too difficult to encode at a given bit-rate, when even the maximum quantization-step (Qmax = 62 for MPEG-2 linear quantization scheme) is used and still could not be sustained at the given low bit-rate, the VBV. buffer vill reach the panic level.

To prevent this from happening, the non-linear quantization (NLQ) scheme which allows the Q value to reach a higher maximum value (Qmax_non_linear=112 in MPEG-2) is used (module 328). The decision of when to use NLQ (module 327) can be made by means of checking if the VBV buffer-fullness reaches a specified low level, *Th1:*

if (VBV_fullness < Th1) → use non-linear quantization scheme
else → *use* linear quantization scheme

Or, by means of checking whether the average Q-step of the picture has reached its maximum:

if (Omean > = Qmax_linear) → use non-linear quantization scheme
*else use linear quantization scheme*

If using this NLQ is still not enough to avoid the buffer-fullness to drop further, the optional customised inter and intra quantization matrices(which have larger values than the default Q-matrix) are then used in an effort to prevent the buffer fullness level from entering the panic level. The decision of when to use the customised Q-matrix (CQM) in module 329 can be made by means of cheeking if the buffer-fullness reaches an even lower level at *Th2:*

if (VBV fullness < Th2) → use customised inter & intra Q-matrices
else → use default Q-matrices

Or, by means of checking whether the average non-linear Q-step of the picture has reached its maximum:

*if ($\underline{Q}mean = = \underline{Q}max\_non\_linear) \rightarrow$ use customised inter & intra $\underline{Q}$-marrices*

*else $\rightarrow$ use default Q-matrices*

When switching from the default Q-matrix to the customised Q-matrix (module 333), the value of $d_0$ is reduced in module 334 by a value *d2* to allow the Q-steps to have some room for adjustment.

In a preferred embodiment of the present invention, the values of *Th1, Th2* and *Th3* are experimentally determined as 200 000, 150 000 and 100 000 respectively for PAL picture. The optional customised Q-matrices are scaled versions of the default Q-matrices. The scaling factor used is 1.25 for Intra-Q-matrix and 1.5 for Inter-Q-matrix. It should be appreciated that these values may be varied if desired.

Slice level control:

To ensure that no overflow bits are wastefully stuffed, slice level VBV buffer-fullness estimation is performed. Before encoding the current picture, the estimated_VBV_fullness is first initialised in module 319. After encoding each slice, the estimated_VBV_fullness is updated in module 303:

$$estimated\_VBV\_fullness = estimated\_VBV\_fullness - S_{slice} + B_{ps} \qquad (11a)$$

where $S_{slice}$ is the number of bits used to encode the slice and $B_{ps}$ is the average number of bits per slice *(Bpp / number_ of_slice_per_picture).* The value do is further reduced in module 305 at slice level if it is found in module 304 that the estimated_VBV_fullness exceeds the buffer size, *VBV_buffer_size,* so as to further increase the bits used in encoding the next slice.

$$if\ (estimated\_VBV\_fullness > VBV\_buffer\_size)\quad d_0 = d_0' - d1 \qquad (11b)$$

For underflow control, the estimated VBV buffer-fullness is updated in module 306:

$$VBV\_fullness = VBV\_fullness - S_{slice} \qquad (12)$$

where $S_{slice}$ is the number of bits used to encode the current slice. Note that $S_{slice}$ includes the bits used for encoding the picture header for the first slice. If the VBV buffer-fullness is found in module 307 to be lower than threshold *Th3,* the value of do is increased in module 309 by a value *d2* to ensure that the quantization-step can reach the maximum value quicker, if it is found in module 308 that it has not reach its upper limit *dhigh.*

A variable panic level (VPL) which is defined as:

$$VPL = j*Slice\_max\_panic + Slice\_max\_nonpanic \qquad (13)$$

is computed in module 310. The VPL varies according to the number of remaining slices, *j*, to be coded. The *Slice_ max_panic* is the maximum number of bits required to encode a slice in the panic mode and the *Slice_max_nonpanic* is the maximum number of bits required to encode a slice in the non-panic mode but at the maximum quantization-step.

The slice panic level is made variable depending on the remaining number of slices yet to be encoded to make the VBV control more optimal such that the encoder does not go into the panic mode prematurely. A panic mode encoding flag is set in module 312 as an indication to the encoder, if it is found in module 311 that the VBV_fullness goes below the VPL.

The values of *d1, d2* and *dhigh* are experimentally determined and suitable values are 50 000, 100 000 and 500 000 respectively.

The values of *Slice_max_nonpanic* and *Slice_max_panic* are chosen carefully to guarantee that no underflow will occur. The values are experimentally determined and may vary according to the picture type and picture size. An example value for *Slice _max_nonpanic* is 10 000, and example values for *Slice_max_panic* are 2000 for I-picture and 150 for P and B pictures.

After the picture is encoded, *bits_stuff* is computed in module 314 and checked in module 315, if there are bits-stuffing module 316 is required. Rate control and bit-allocation is then performed in module 317 and the VBV buffer-fullness is then updated in module 318.

The preferred embodiment of the present invention performs well in terms of picture quality and buffer-fullness control. The additional picture and slice level overflow and underflow control provide improvements over the prior art, especially in terms of panic mode prevention and overflow prevention. Panic mode encoding has been avoided even for very difficult sequence coding at very low bit-rate. Slice level underflow control is used in place of MB level control and the complexity requirements are reduced as well as individual MB panic mode coding avoided.

VBV buffer overflow is also avoided when encoding video sequences which switch from a high level of motion (having lots of scene-changes) to a low level of motion, which demonstrates that the quantization-step is able to respond quickly enough to the changes.

Thus, there has been provided in accordance with the present invention, a Video Buffer Verifier (VBV) control of a video encoder which satisfies the advantages set forth above.

**Claims**

1. A method for Video Buffer Verifier (VBV) control of a video encoder, comprising a picture level control including:

   - controlling virtual buffer fullness (201-203, 204, 205, 208);
   - controlling quantization-step (207); and
   - checking panic mode conditions (205);

   **characterized in that** the picture level control further includes the step of modifying quantization matrices (208) in case of panic mode conditions,
   and **in that** the method further comprises a slice level control including:

   - controlling virtual buffer fullness (209-214);
   - controlling quantization-step (303-309); and
   - computing a variable panic level (215) according to the number of remaining slices to be coded.

2. A method according to claim 1, wherein said step of controlling quantization-step during picture level control comprises checking (327) whether a panic level may be reached even using a linear maximum quantization-step and, in this case, using a non-linear quantization scheme (328).

3. A method according to claim 2, wherein the step of checking (327) whether a panic level may be reached comprises checking whether the VBV buffer fullness reaches a first low level (Th1).

4. A method according to any of claims 1-3, wherein said step of modification of quantization matrices comprises checking (329) whether a panic level may be reached even using a non-linear maximum quantization-step and, in this case, using (333)customized inter and intra quantization matrix.

5. A method according to claim 4, further comprising reducing buffer fullness (334).

6. A method as claimed in claim 1 wherein, the slice level control is used in place of an MB level control.

7. A method as claimed in any one of the claims 1 to 6 wherein, the video encoding is MPEG-2 video encoding.

8. A method as claimed in any one of the claims 1 to 7 wherein, said method includes the following steps:

   at the picture level control:

   updating (320) the VBV buffer-fullness in at least one VBV Update module before at least one Potential Overflow Check module: reducing (324, 322) the virtual buffer-fullness and increasing the target bit allocation in a Decrease Virtual Buffer-Fullness and Increase Bit Allocation module; if there is an underflow potential, then according to that underflow potential level: reducing (326) a target bit $T$ in a Decrease Bit Allocation module; increasing quantization step (328) in an Increase Quantization Range module; and/or modifying (331) the quantization matrices and reducing the virtual buffer-fullness in a Modify quantization-Matrices and Decrease Virtual Buffer-Fullness module;

at the slice level control:

estimating (303) the VBV buffer-fullness in a VBV Estimation module;

checking (304) for an overflow potential in a Potential Overflow Check module;

if an overflow potential is found, decreasing (305) the virtual buffer-fullness in a Decrease Virtual Buffer-Fullness module;

for underflow control, updating (306) the slice level VBV in a VBV Update module; performing (307) a potential underflow check in a Potential Underflow Check module;

after determination of the underflow potential level: increasing (310) the virtual buffer-fullness in an Increase Virtual Buffer-Fullness module; and/or setting (312) the panic mode coding in a Set Panic Mode Coding module;

and encoding a slice in an Encode a Slice module.

9. A method as claimed in any one of the claims 1 to 8 wherein; the method assists in panic mode coding prevention by addition (322) of a preventive margin to a target bits factor T.

10. A method as claimed in any one of the claims 1 to 9 wherein, for constant bit-rate coding:

at the picture level :

overflow prediction is rendered more sensitive by incorporation (322) a factor dependent on the encoding bit-rate; and

reducing (324) the virtual buffer-fullness when a factor extra-bits is greater than 0; at the slice level:

estimating (303) the VBV buffer-fullness in each slice and reducing the virtual buffer-fullness if required.

11. A method as claimed in any one of the claims 1 to 10 wherein, specified levels of buffer-fullness are experimentally determined for each picture type.

12. An apparatus for Video Buffer Verifier (VBV) control of a video encoder, comprising a picture level control including:

- means (201-203, 204, 205, 208) for controlling virtual buffer fullness;
- means (207) for controlling quantization-step; and
- means (205) for controlling presence of panic mode conditions;

**characterized in that** the picture level control further includes means (208) for modifying quantization matrices in case of presence of panic mode conditions,
and **in that** the apparatus further comprises a slice level control including:

- means (209-214) for controlling virtual buffer fullness;
- means (303-309) for controlling quantization-step;
- means (215) for computing a variable panic level according to the number of remaining slices to be coded.

13. Apparatus as claimed in claim 12 wherein, at the picture level said apparatus includes:

at least one VBV Update module;
at least one Potential Overflow Check module;
a Decrease Virtual Buffer Fullness and Increase Bit Allocation module;
a Decrease Bit Allocation module; an Increase Quantization Range module; and
a Modify quantitation-Matrices and Decrease Virtual Buffer-Fullness module: and at the slice level said apparatus includes:

a VBV Estimation module;
a VBV Update module;
a Potential Overflow Check module;
a Potential Underflow Check module;
a Decrease Virtual Buffer-Fullness module; an Increase Virtual Builer-Fullness module;
a Set Panic Mode Coding module; and
an Encode a Slice module.

## Patentansprüche

1. Verfahren zur Video-Buffer-Varifier-(VBV-)Steuerung eines Videocodierers, umfassend eine Bildhelligkeitsteuerung, umfassend:

   - Steuern der virtuellen Pufferfüllung (201-203, 204, 205, 208);
   - Steuern eines Quantisierungsschritts (207); und
   - Prüfen von Krisenmodusbedingungen (205);

   **dadurch gekennzeichnet, dass** die Bildhelligkeitssteuerung weiterhin den Schritt des Modifizierens von Quantisierungsmatrizen (208) im Fall von Krisenmodusbedingungen beinhaltet,
   und dass das Verfahren außerdem eine Slicelevel-Steuerung beinhaltet, umfassend:

   - das Steuern der virtuellen Pufferfüllung (209-214);
   - Steuern des Quantisierungsschritts (303-309); und
   - Berechnen eines veränderlichen Krisenpegels (215) entsprechend der Anzahl verbleibender zu codierender Slices.

2. Verfahren nach Anspruch 1, bei dem der Schritt des Steuerns des Quantisierungsschritts während der Bildhelligkeitsteuerung beinhaltet: Prüfen (327), ob ein Krisenpegel auch unter Verwendung eines linearen Maximum-Quantisierungsschritts erreicht werden kann, und, falls ja, Verwenden eines nicht-linearen Quantisierungsschemas (328).

3. Verfahren nach Anspruch 2, bei dem der Schritt des Prüfens (327), ob ein Krisenpegel erreicht werden kann, das Prüfen beinhaltet, ob die VBV-Puffer-Füllung einen ersten niedrigen Pegel (Th1) erreicht.

4. Verfahren nach einem der Ansprüche 1-3, bei dem der Schritt des Modifizierens von Quantisierungsmatrizen umfasst: Prüfen (329), ob ein Krisenpegel auch bei Verwendung eines nicht-linearen Maximum-Quantisierungsschritts erreicht werden kann, und, falls ja, Verwenden (333) einer maßgeschneiderten Inter- und Intra-Quantisierungsmatrix.

5. Verfahren nach Anspruch 4, weiterhin umfassend das Verringern der Pufferfüllung (334).

6. Verfahren nach Anspruch 1, bei dem die Slicelevel-Steuerung anstelle einer MB-Pegel-Steuerung verwendet wird.

7. Verfahren nach einem der Ansprüche 1-6, bei dem die Videocodierung eine MPEG-2-Videocodierung ist.

8. Verfahren nach einem der Ansprüche 1-7, bei dem das Verfahren folgende Schritte beinhaltet:

   bei der Bildhelligkeitssteuerung :

   Aktualisieren (320) der VBV-Puffer-Füllung in mindestens einem VBV-Aktualisierungsmodul vor mindestens einem Prüfmodul für möglichen Überlauf, Reduzieren (324, 322) der virtuellen Pufferfüllung und Erhöhen der Ziel-Bitzuordnung in einem Modul zur Verringerung der virtuellen Pufferfüllung und Steigerung der Bitzuordnung; falls es ein mögliches Underflow-Problem gibt, dann wird nach Maßgabe des möglichen Underflow-Pegels: ein Targetbit T in einem Modul zur Verringerung der Bitzuordnung reduziert (326), in einem Modul zum Erhöhen des Quantisierungsbereichs die Quantisierung erhöht; und/oder es werden die Quantisierungsmatrizen modifiziert (331) und die virtuelle Pufferfüllung in einem Modul zum Modifizieren von Quantisierungsmatrizen und zum Verringern der virtuellen Pufferfüllung verringert;

   bei der Slicelevel-Steuerung erfolgt ein:

Abschätzen (303) der VBV-Pufferfüllung in einem VBV-Abschätzmodul; ein Prüfen (304) auf ein mögliches Überlaufproblem in einem Modul zum Prüfen eines möglichen Überlaufs;

wenn ein Überlaufproblem aufgedeckt wird, wird die virtuelle Pufferfüllung in einem Modul zum Verringern der virtuellen Pufferfüllung verringert (305);

bei einer Underflow-Steuerung wird in einem VBV-Aktualisierungsmodul der Slice-Level aktualisiert (306);

in einem Modul für die Prüfung eines möglichen Underflows erfolgt eine Prüfung auf möglichen Underflow (307);

nach dem Bestimmen des möglichen Underflow-Pegels: Steigern (310) der virtuellen Pufferfüllung in einem Modul zum Erhöhen der virtuellen Pufferfüllung; und/oder Einstellen der Problemmoduscodierung in einem Modul zum Einstellen einer Problemmoduscodierung;

und Codieren eines Slices in einem Slice-Codierungsmodul.

9. Verfahren nach einem der Ansprüche 1-8, bei dem das Verfahren bei einer Problemmoduscodierung-Verhinderung einen Beitrag leistet durch Hinzufügen (322) einer Schutztoleranz zu einem Targetbits-Faktor T.

10. Verfahren nach einem der Ansprüche 1-9, bei dem für eine konstante Bitratencodierung:

auf der Bildebene eine Überlauf-Vorhersage **dadurch** empfindlicher gemacht wird, dass ein von der Codierungsbitrate abhängiger Faktor einbezogen wird (322); und

die virtuelle Pufferfüllung dann reduziert wird (324), wenn ein Extrabit größer als 0 ist;

auf der Slice-Ebene:

Abschätzen (303) der VBV-Pufferfüllung in jedem Slice und bedarfsweises Verringern der virtuellen Pufferfüllung.

11. Verfahren nach einem der Ansprüche 1-10, bei dem spezifizierte Pegel der Pufferfüllung für jedem Bildtyp experimentell ermittelt werden.

12. Vorrichtung in einem Videocodierer, umfassend eine Bildebenen-Steuerung, welche enthält:

- eine Einrichtung (201-203, 204, 205, 208) zum Steuern der virtuellen Pufferfüllung;
- eine Einrichtung (207) zum Steuern eines Quantisierungsschritts; und
- eine Einrichtung (205) zum Steuern des Vorhandenseins von Problemmodus-Bedingungen;

**dadurch gekennzeichnet, dass** die Bildebenen-Steuerung weiterhin enthält:

eine Einrichtung (208) zum Modifizieren von Quantisierungsmatrizen im Fall des Vorhandenseins von Problemmodus-Bedingungen,

und dass die Vorrichtung weiterhin eine Slice-Ebenen-Steuerung aufweist, welche enthält:

- eine Einrichtung (209-214) zum Steuern der virtuellen Pufferfüllung;
- eine Einrichtung (303-309) zum Steuern eines Quantisierungsschritts;
- eine Einrichtung (215) zum Berechnen eines variablen Problempegels nach Maßgabe der Anzahl der zu codierenden verbliebenen Slices.

13. Vorrichtung nach Anspruch 12, die auf der Bildebene aufweist:

mindestens ein VBV-Aktualisierungsmodul;

mindestens ein Modul zum Prüfen eines möglichen Überlaufs;

ein Modul zum Verringern der virtuellen Pufferfüllung und zum Erhöhen der Bitzuordnung;

ein Modul zum Verringern der Bitzuordnung; ein Modul zum Erhöhen des Quantisierungsbereichs; und ein Modul zum Modifizieren von Quantisierungsmatrizen und zum Verringern der virtuellen Pufferfüllung; und

die Vorrichtung auf der Slice-Ebene enthält:

ein VBV-Abschätzmodul;

ein VBV-Aktualisierungsmodul;

ein Modul zum Prüfen eines möglichen Überlaufs;

ein Modul zum Prüfen eines möglichen Underflows;
ein Modul zum Verringern der virtuellen Pufferfüllung;
ein Modul zum Erhöhen der virtuellen Pufferfüllung;
ein Modul zum Einstellen der Problemmoduscodierung; und
ein Slice-Codierungsmodul.

**Revendications**

1. Procédé de contrôle de vérificateur de tampon vidéo (VBV) d'un codeur vidéo, comprenant un contrôle de niveau d'image comportant :

   - le contrôle d'une plénitude d'un tampon virtuel (201 - 203, 204, 205, 208) ;
   - le contrôle de l'étape de quantification (207) ; et
   - la vérification des conditions de mode de panique (205) ;

   **caractérise en ce que** le contrôle de niveau d'image comprend en outre l'étape de modification des matrices de quantification (208) dans le cas de conditions de mode de panique,
   et **en ce que** le procédé comprend en outre un contrôle de niveau de tranche comportant :

   - le contrôle de la plénitude du tampon virtuel (209 - 214) ;
   - le contrôle de l'étape de quantification (303 - 309) ; et
   - le calcul d'un niveau de panique variable (215) selon le nombre de tranches restantes devant être codées.

2. Procédé selon la revendication 1, dans lequel ladite étape de contrôle d'étape de quantification pendant le contrôle de niveau d'image comprend la vérification (327) pour savoir si un niveau de panique peut être atteint même en utilisant une étape de quantification maximale linéaire et, dans ce cas, l'utilisation d'un processus de quantification non linéaire (328).

3. Procédé selon la revendication 2, dans lequel l'étape de vérification (327) pour savoir si un niveau de panique peut être atteint comprend la vérification de savoir si la plénitude du tampon VBV atteint un premier niveau inférieur (Th1).

4. Procédé selon l'une quelconque des revendications 1

   - 3, dans lequel ladite étape de modification des matrices de quantification comprend la vérification (329) pour savoir si un niveau de panique peut être atteint même en utilisant une étape de quantification maximale non linéaire et, dans ce cas, l'utilisation (333) des matrices de quantification adaptées inter et intra.

5. Procédé selon la revendication 4, comprenant en outre la réduction de plénitude de tampon (334).

6. Procédé selon la revendication 1 dans lequel, le contrôle de niveau de tranche est utilisé à la place d'un contrôle de niveau MB.

7. Procédé selon l'une quelconques des revendications 1 à 6, dans lequel le codage vidéo est un codage vidéo MPEG-2.

8. Procédé selon l'une quelconque des revendications 1 à 7, dans lequel, ledit procédé comprend les étapes suivantes :

   au niveau du contrôle de niveau d'image :

   la mise à jour (320) de la plénitude de tampon VBV dans au moins un module de mise à jour VBV avant au moins un module de vérification de dépassement potentiel ; réduire (324, 322) la plénitude de tampon virtuel et augmenter l'attribution de bit cible dans un module de diminution de plénitude de tampon virtuel et d'augmentation d'attribution de bit ; s'il existe un potentiel de soupassement, alors selon ce niveau potentiel de soupassement : réduire (326) un bit cible $T$ dans un module de diminution d'attribution de bit ; augmenter une étape de quantification (328) dans un module d'augmentation de gamme de quantification ; et / ou modifier (331) les matrices de quantification et réduire la plénitude de tampon virtuel dans un module de modification de matrices de quantification et de diminution de plénitude de tampon virtuel ;

au niveau du contrôle de niveau de tranche :

estimer (303) la plénitude de tampon VBV dans un module d'estimation de VBV ;
vérifier (304) un potentiel de dépassement dans un module de vérification de potentiel de dépassement ;
si un potentiel de dépassement est trouvé, diminuer (305) la plénitude de tampon virtuel dans un module de diminution de plénitude de tampon virtuel ;
pour un contrôle de soupassement, mettre à jour (306) le niveau de tranche VBV dans un module de mise à jour de VBV ; effectuer (307) une vérification de soupassement potentiel dans un module de vérification de soupassement potentiel ;
après la détermination du niveau de potentiel de soupassement ; augmenter (310) la plénitude de tampon virtuel dans un module d'augmentation de plénitude de tampon virtuel ; et / ou régler (312) le codage de mode de panique dans un module de réglage de codage de mode de panique ;
et coder une tranche dans un module de codage de tranche.

9. Procédé selon l'une quelconque des revendications 1 à 8 dans lequel, le procédé aide à empêcher le codage de mode de panique en ajoutant (322) une marge de prévention à un facteur de bits cibles T.

10. Procédé selon l'une quelconque des revendications 1 à 9, dans lequel, pour un codage de débit de bit constant :

au niveau du niveau d'image:

une prédiction de dépassement est rendue plus sensible en incorporant (322) un facteur dépendant du débit de bit de codage ; et
la réduction (324) de la plénitude de tampon virtuel lorsqu'un facteur de bits supplémentaires est supérieur à 0 ;
au niveau du niveau de tranche :

estimer (303) la plénitude de tampon virtuel VBV dans chaque tranche et réduire la plénitude de tampon virtuel si nécessaire.

11. Procédé selon l'une quelconque des revendications 1 à 10 dans lequel, des niveaux spécifiés de plénitude de tampon sont déterminés de manière expérimentale pour chaque type d'image.

12. Appareil pour le contrôle d'un vérificateur de tampon vidéo (VBV) d'un codeur vidéo, comprenant un contrôle de niveau d'image comportant :

- des moyens (201 - 203, 204, 205, 208) pour contrôler une plénitude de tampon virtuel ;
- des moyens (207) pour contrôler une étape de quantification ; et
- des moyens (205) pour contrôler la présence de conditions de mode de panique ;

**caractérisé en ce que** le contrôle de niveau d'image comprend en outre des moyens (208) pour modifier des matrices de quantification dans le cas de la présence de conditions de mode de panique,
et **en ce que** l'appareil comprend en outre un contrôle de niveau de tranche comportant :

- des moyens (209 - 214) pour contrôler une plénitude de tampon virtuel ;
- des moyens (303 - 309) pour contrôler l'étape de quantification ;
- des moyens (215) pour calculer un niveau de panique variable selon le nombre de tranches restantes à coder.

13. Appareil selon la revendication 12 dans lequel, au niveau du niveau d'image ledit appareil comprend :

au moins un module de mise à jour de VBV
au moins un module de vérification de dépassement potentiel ;
un module de diminution de plénitude de tampon virtuel et d'augmentation d'attribution de bit ;
un module de diminution d'attribution de bit ; un module d'augmentation de gamme de quantification ; et
un module de modification de matrices de quantification et de diminution de plénitude de tampon virtuel ; et au niveau du niveau de tranche l'appareil comprend :

un module d'estimation de VBV ;

un module de mise à jour de VBV ;
un module de vérification de dépassement potentiel ;
un module de vérification de soupassement potentiel ;
un module de diminution de plénitude de tampon virtuel ; un module d'augmentation de plénitude de tampon virtuel ;
un module de réglage de codage de mode de panique ; et
un module de codage de tranche.

Figure 1

Figure 2

# Figure 3

Figure 3